# EUROPÄISCHE PATENTANMELDUNG

(11) **EP 3 761 389 A1**
(43) Veröffentlichungstag der Anmeldung: **06.01.2021**
(21) Anmeldenummer: 19183526.3
(22) Anmeldetag: 01.07.2019
(51) Int. Cl.: H01M 2/10, H01M 10/653

(54) **AKKUPACK FÜR EINE ELEKTRISCHE HANDWERKZEUGMASCHINE UND VERFAHREN**

(71) Anmelder: Hilti Aktiengesellschaft, 9494 Schaan (LI)
(72) Erfinder: Richter, Rene, 86199 Augsburg (DE); Möhlmann, Alwin, 86857 Hurlach (DE); Buchmeyer, Markus, 80992 München (DE)
(74) Vertreter: Hilti Aktiengesellschaft Corporate Intellectual Property

(57) **Zusammenfassung**

Akkupack für eine elektrische Handwerkzeugmaschine, wobei das Akkupack eine Gehäuseschale und ein in der Gehäuseschale aufgenommenes Core-Pack aufweist, wobei die Gehäuseschale mit einer Vergussmasse vergossen ist, die einer Wärmeabfuhr vom Core-Pack dient, wobei die Vergussmasse wenigstes zweilagig mit einer ersten Lage und einer zweiten Lage in die Gehäuseschale eingebracht ist.

## Beschreibung

Die vorliegende Erfindung betrifft einen Akkupack für eine elektrische Handwerkzeugmaschine. Das Akkupack weist eine Gehäuseschale und ein in der Gehäuseschale aufgenommenes Core-Pack auf. Die Gehäuseschale ist mit einer Vergussmasse vergossen, die einer Wärmeabfuhr vom Core-Pack dient.

Die vorliegende Erfindung betrifft ebenfalls ein Verfahren zum Herstellen eines Akkupacks für eine elektrische Handwerkzeugmaschine. Das Akkupack weist eine Gehäuseschale und ein in der Gehäuseschale aufzunehmendes Core-Pack auf, wobei zwischen der Gehäuseschale und dem Core-Pack zumindest ein formschlüssiges Dicht-Halte-Element vorgesehen ist, um das Core-Pack in aufgenommenem Zustand bezüglich der Gehäuseschale in zumindest einer Richtung lagefest zu halten und abzudichten. Die Gehäuseschale ist zumindest abschnittsweise mit einer Vergussmasse zu vergießen, die einer Wärmeabfuhr vom Core-Pack dient. Das Core-Pack kann auch als Zell-Pack, Zellen-Päckchen bzw. Akkuzellen-Paket bezeichnet werden.

Solche Akkupacks und entsprechende Verfahren zum Herstellen, insbesondere zum Vergiessen von Akkupacks sind grundsätzlich aus dem Stand der Technik bekannt. Es ist Aufgabe der vorliegenden Erfindung ein Akkupack mit verbessertem Verguss innerhalb der Gehäuseschale, sowie ein entsprechendes verbessertes Verfahren anzugeben.

Bezüglich des Akkupacks wird die Aufgabe dadurch gelöst, dass die Vergussmasse wenigstes zweilagig mit einer ersten Lage und einer zweiten Lage in die Gehäuseschale eingebracht ist. Bezüglich des Verfahrens wird die Aufgabe durch die folgenden Schritte gelöst:
- Einfüllen einer ersten Füllmenge der Vergussmasse in die Gehäuseschale;
- Verbringen des Core-Packs in seine Endlage innerhalb der Gehäuseschale, wobei die ersten Füllmenge der Vergussmasse teilausgehärtet ist; und
- Einfüllen einer zweiten Füllmenge der Vergussmasse in die Gehäuseschale.

Die Erfindung schließt die Erkenntnis ein, dass Akkupacks zur Gewährleistung eines dauerhaft sicheren Betriebs möglichst fehlerfrei vergossen werden müssen. Die schließt zum einen ein Vermeiden eines Vergießens von sicherheitskritischen Bauteilen, wie beispielsweise von CID-Bauteilen (Current Interrupt Devices) ein. Zum anderen ist es wünschenswert Vergussfehlstellen etwa im Bereich eines formschlüssigen Dicht-Halte-Elements zwischen Gehäuseschale und Core-Pack zu vermeiden.

Das erfindungsgemäße Verfahren schafft beispielsweise die Grundlage dafür, dass eine durch die erste Füllmenge der Vergussmasse gebildete erste Lage einen Boden der Gehäuseschale vollständig bedecken kann. Hierbei wurde erkannt, dass eine solche erste Lage von Vergussmasse in teilausgehärtetem Zustand bereits eine adäquate Dichtung im Bodenbereich der Gehäuseschale bildet und somit - zumindest Bodenbereich - keine im weiteren Verlauf einzufüllende Vergussmasse unterseitig in den Core-Pack eindringen und so etwaige CID-Bauteile in nachteiliger Weise verschließen kann. Gleichzeitig können durch die erste Lage der Vergussmasse etwaige Kunststofftoleranzen im typischerweise sehr lang ausgebildeten Bodenbereich der Gehäuseschale kompensiert werden.

In einer besonders bevorzugten Ausgestaltung des erfindungsgemäßen Akkupacks, ist zwischen der Gehäuseschale und dem Core-Pack zumindest ein formschlüssiges Dicht-Halte-Element vorgesehen ist, um das Core-Pack bezüglich der Gehäuseschale in zumindest einer Richtung lagefest zu halten und abzudichten. In einer besonders bevorzugten Ausgestaltung des erfindungsgemäßen Akkupacks ist die Vergussmasse derart wenigstes zweilagig in die Gehäuseschale eingebracht, dass das formschlüssige Dicht-Halte-Element zumindest abschnittsweise in die erste Lage der Vergussmasse eingedrückt ist. Dies hat den Vorteil, dass das formschlüssige Dicht-Halte-Element im Wesentlichen frei von Vergussfehlstellen ist und somit auch eine adäquate Dichtung im Seitenbereich der Gehäuseschale gewährleistet ist. Alternativ kann die Vergussmasse derart wenigstes zweilagig in die Gehäuseschale eingebracht sein, dass das formschlüssige Dicht-Halte-Element lediglich außerhalb der ersten Lage der Vergussmasse befindlich ist.

Es hat sich als vorteilhaft herausgestellt, wenn die zweite Lage auf die teilausgehärtete erste Lage aufgebracht wurde. In einer weiteren bevorzugten Ausgestaltung ist das formschlüssiges Dicht-Halte-Element in Form einer Nut-Feder-Verbindung ausgebildet. Alternative kann das formschlüssige Dicht-Halte-Element als Wechselfalzspundung, Dreieckspundung oder dergleichen ausgebildet sein.

Es hat sich als vorteilhaft herausgestellt, wenn die die erste Lage der Vergussmasse einen Boden der Gehäuseschale im Wesentlichen vollständig bedeckt. Innerhalb der Gehäuseschale und oberhalb der zweite Lage der Vergussmasse kann ein unvergossenes Restvolumen verbleibt. Alternativ kann mittels der zweite Lage der Vergussmasse die Gehäuseschale vollständig vergossen sein. Bevorzugt weist das Core-Pack einen Zellenhalter mit einer Mehrzahl zylindrischer Akkuzellen auf.

Bezüglich des Verfahrens hat es sich als vorteilhaft herausgestellt, wenn beim Schritt des Einfüllens der ersten Füllmenge der Vergussmasse in die Gehäuseschale das Einfüllen derart erfolgt, dass ein der Gehäuseschale zugeordneter Teil des formschlüssigen Dicht-Halte-Elements zumindest abschnittsweise von der ersten Füllmenge bedeckt ist. Bevorzugt wird beim Schritt des Verbringens des Core-Packs in seine Endlage innerhalb der Gehäuseschale ein dem Core-Pack zugeordneter Teil des formschlüssigen Dicht-Halte-Elements in die lediglich teilausgehärtete, erste Füllmenge der Vergussmasse eingedrückt.

In einer alternativen Verfahrensausgestaltung ist zwischen der Gehäuseschale und dem Core-Pack zumindest ein formschlüssiges Dicht-Halte-Element vorgesehen, um das Core-Pack in aufgenommenem Zustand bezüglich der Gehäuseschale in zumindest einer Richtung lagefest zu halten und abzudichten, wobei beim Schritt des Einfüllens der ersten Füllmenge der Vergussmasse in die Gehäuseschale das Einfüllen derart erfolgt, dass ein der Gehäuseschale zugeordneter Teil des formschlüssigen Dicht-Halte-Elements lediglich außerhalb einer durch die erste Füllmenge gebildeten ersten Lage der Vergussmasse befindlich ist.

In einer besonders bevorzugten Verfahrensausgestaltung wird beim Schritt des Einfüllens der ersten Füllmenge der Vergussmasse ein Boden der Gehäuseschale vollständig mit der ersten Füllmenge bedeckt. Vorzugsweise verbleibt innerhalb der Gehäuseschale und oberhalb der durch die zweite Füllmenge gebildete zweite Lage der Vergussmasse ein unvergossenes Restvolumen. Alternativ kann ein solches Restvolumen ebenfalls mit Vergussmasse verfüllt werden.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansichten eines Akkupacks des Standes der Technik;
- Fig. 2: ein erstes bevorzugtes Ausführungsbeispiel eines erfindungsgemäßen Akkupacks;
- Fig. 3: ein zweites bevorzugtes Ausführungsbeispiel eines erfindungsgemäßen Akkupacks;
- Fig. 4: eine schematische Darstellung des Ausführungsbeispiels der Fig. 3; und
- Fig. 5: ein bevorzugtes Ausführungsbeispiel eines erfindungsgemäßen Verfahrens.

### Ausführunasbeispiele:

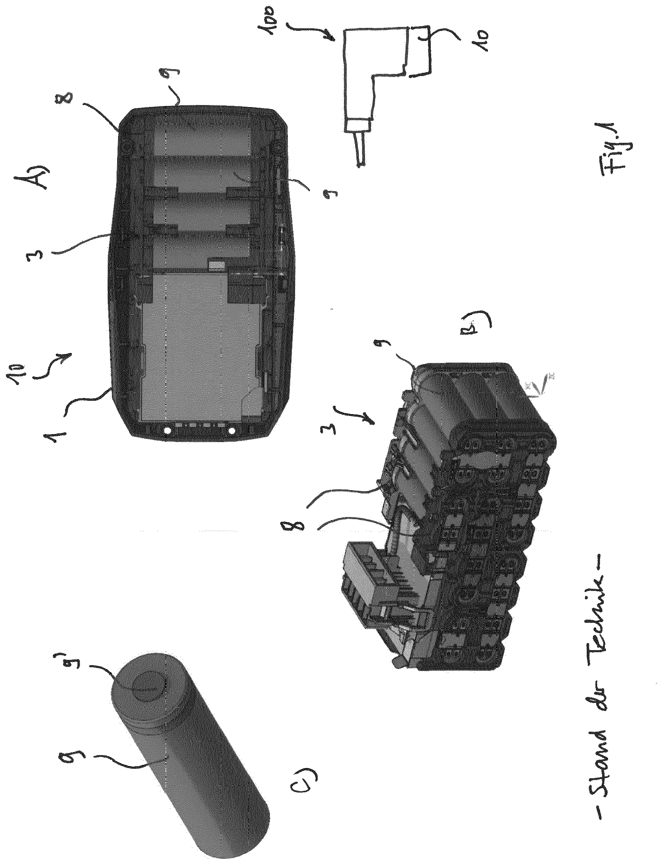

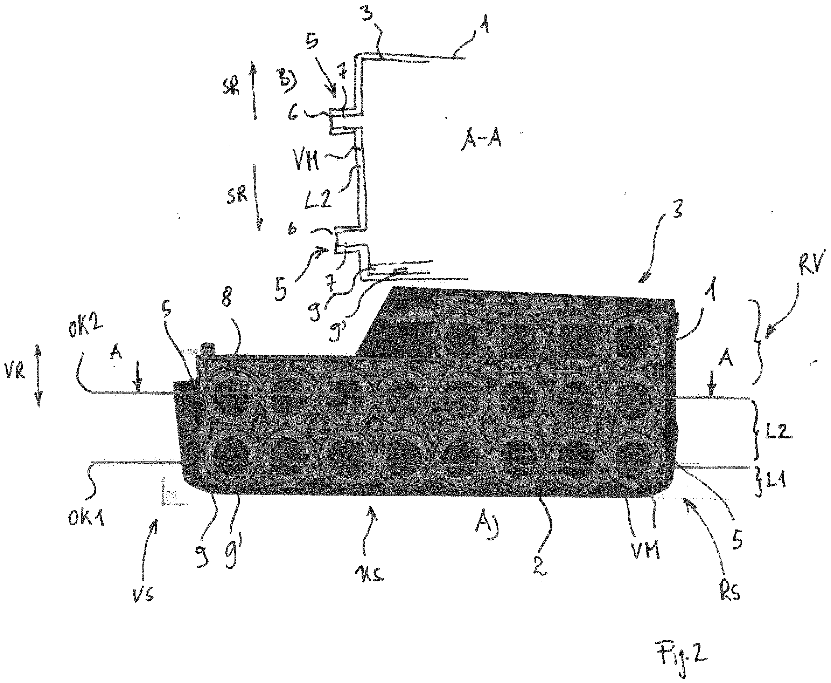

Fig. 1 zeigt zunächst verschiedene Ansichten bzw. Komponenten eines Akkupacks 10 des Standes der Technik. Das Akkupack 10 in Fig. 1A ist zur Versorgung einer elektrischen Handwerkzeugmaschine 100, hier in Form eines Akkuschraubers, vorgesehen. Das Akkupack 10 weist eine Gehäuseschale 1 auf in der ein Core-Pack 3 aufgenommen ist. Das Core-Pack 3 ist bezüglich der Gehäuseschale 1 typischerweise knapp toleriert. Das Core-Pack 3 weist einen Zellenhalter 8 mit einer Mehrzahl zylindrischer Akkuzellen 9 auf. Fig. 2B zeigt das Core-Pack in perspektivischer Darstellung. Eine einzelne zylindrische Akkuzelle 9 mit einem endständigen CID-Bauteil in Form eines CID-Ventils 9' ist aus Fig. 1C ersichtlich. Das CID-Ventils 9' sollte frei von einer hier nicht dargestellten Vergussmasse sein.

Ein bevorzugtes Ausführungsbeispiel eines erfindungsgemäßen Akkupacks 10 ist in Fig. 2 dargestellt. Dabei zeigt Fig. 2A einen vertikalen Schnitt durch das Akkupack 10 entlang einer Außenfläche des Zellenhalters 8, der gleichzeitig einen äußeren Rand des Core-Packs 3 (in Fig. 2 lediglich mit einer Akkuzelle 9 dargestellt) bildet. Fig. 2B zeigt einen horizontalen Schnitt A-A entlang der Schnittlinie A in Fig. 2A.

Wie der Fig. 2 entnommen werden kann ist die Gehäuseschale 1 mit einer Vergussmasse VM vergossen, die einer Wärmeabfuhr vom Core-Pack 3 dient. Genauer gesagt ist die Vergussmasse VM dazu bestimmt, die hier nicht gezeigten Akkuzellen im Bereich ihres Zylindermantels zu umschließen und so eine Wärmemenge von einer jeweiligen Akkuzelle abzuführen.

Erfindungsgemäß ist die Vergussmasse VM wenigstes zweilagig mit einer ersten Lage L1 und einer zweiten Lage L2 in die Gehäuseschale 1 eingebracht. Die erste Lage L1 der Vergussmasse VM bedeckt einen Boden 2 der Gehäuseschale 1 vollständig. Eine solche erste Lage L1 der Vergussmasse VM bildet in teilausgehärtetem Zustand bereits eine adäquate Dichtung im Bereich des Bodens 2 der Gehäuseschale 1. Somit kann - zumindest im Bereich des Bodens 2 der Gehäuseschale 1 - keine im weiteren Verlauf einzufüllende Vergussmasse VM auf der Unterseite US in den Core-Pack 3 eindringen und so etwaige CID-Bauteile (vgl. Akkuzelle 9 mit CID-Ventil 9' in Fig. 1C) in nachteiliger Weise verschließen. Mit anderen Worten verläuft die in die in Fig. 2A gezeigte Oberkante OK1 der erste Lage 1 gerade unterhalb des hier beispielhaft dargestellten CID-Ventils 9' einer in der unteren Reihe des Zellenhalters 8 aufgenommenen Akkuzelle 9. Im Zuge eines Herstellungsverfahrens kann die mit Akkuzellen befüllte untere Reihe in die lediglich teilausgehärtete erste Lage 1 eingedrückt werden.

Eine zweite Lage L2 der Vergussmasse VM wurde auf die teilausgehärtete erste Lage L1 der Vergussmasse VM aufgebracht. Die zweite Lage L2 erstreckt sich zwischen der in Fig. 2A gezeigten Oberkante OK1 der erste Lage 1 aufwärts bis zu einer Oberkante OK2 der zweiten Lage L2.

Um zu verhindern, dass die Vergussmasse VM der zweiten Lage 2 in seitlicher Richtung SR in Kontakt mit dem CID-Ventil 9' der in der unteren Reihe des Zellenhalters 8 aufgenommenen Akkuzelle 9 kommt, ist - wie in aus Fig. 2B ersichtlich ist - zwischen der Gehäuseschale 1 und dem Core-Pack 3 wenigstens ein formschlüssiges Dicht-Halte-Element 5 vorgesehen, um das Core-Pack 3 bezüglich der Gehäuseschale 1 in zumindest einer Richtung lagefest zu halten und abzudichten. Dabei ist das wenigstens eine Dicht-Halte-Element 5 in Form einer Nut-Feder-Verbindung 6, 7 ausgebildet, wobei eine Nut 6 beispielhaft an der Gehäuseschale 1 ausgebildet ist und eine Feder 7 beispielhaft am Core-Pack 3 bzw. am Zellenhalter 8 ausgebildet ist. Im Ausführungsbeispiel der Fig. 2 sind genau vier Dicht-Halte-Element 5 vorgesehen. Zwei befinden sich an der Vorderseite VS des Core-Packs 3 - gut zu erkennen in der Schnittdarstellung der Fig. 2B). Die zwei weiteren Dicht-Halte-Element 5 sind in entsprechender Weise an der Rückseite RS des Core-Packs 3 angeordnet.

Im Ausführungsbeispiel der Fig. 2 sind die formschlüssigen Dicht-Halte-Element 5 lediglich außerhalb der ersten Lage L1 der Vergussmasse VM befindlich. Die Dicht-Halte-Elemente 5 erstrecken sich in vertikaler Richtung VR lediglich zwischen der in Fig. 2A gezeigten Oberkante OK1 der erste Lage 1 bis zu der Oberkante OK2 der zweiten Lage L2. Innerhalb der Gehäuseschale 1 und oberhalb der zweite Lage L2 der Vergussmasse VM verbleibt ein unvergossenes Restvolumen RV.

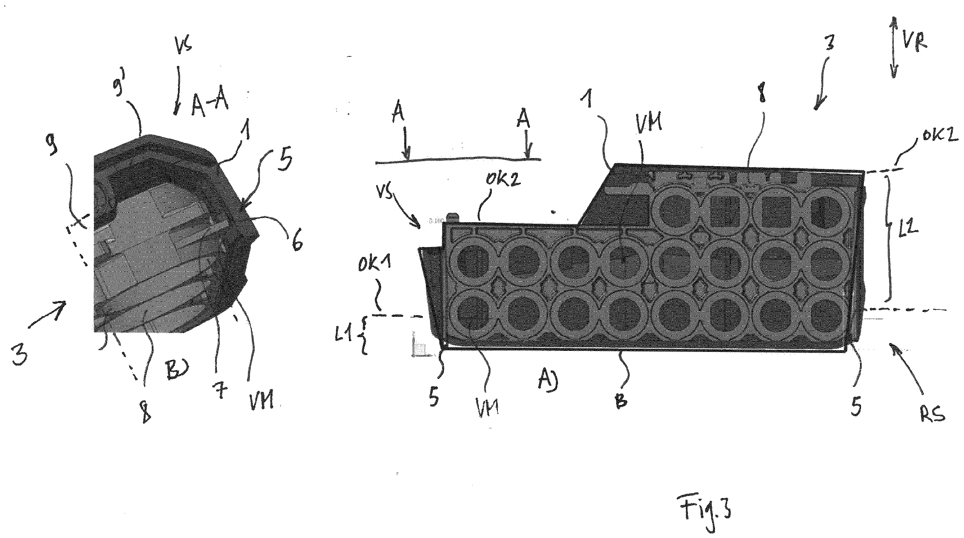

Ein zweites bevorzugtes Ausführungsbeispiel eines erfindungsgemäßen Akkupacks 10 ist in Fig. 3 dargestellt. Dabei zeigt Fig. 3A einen vertikalen Schnitt durch das Akkupack 10 entlang einer Außenfläche des Zellenhalters 8, der gleichzeitig einen äußeren Rand des Core-Packs 3 (in Fig. 3 gänzlich ohne Akkuzellen dargestellt) bildet. Fig. 3B zeigt einen horizontalen Schnitt A-A entlang der Schnittlinie A in Fig. 3A.

Auch im vorliegenden Ausführungsbeispiel wurde die Vergussmasse VM wenigstes zweilagig mit einer ersten Lage L1 und einer zweiten Lage L2 in die Gehäuseschale 1 eingebracht. Dabei wurde die erste Lage L1 der Vergussmasse VM derart eingebracht, dass sie einen Boden 2 der Gehäuseschale 1 vollständig bedeckt.

Um verhindern, dass die Vergussmasse VM der zweiten Lage 2 in seitlicher Richtung SR in Kontakt mit dem CID-Ventil 9' der in der unteren Reihe des Zellenhalters 8 aufgenommenen Akkuzelle 9 kommt, ist - wie in aus Fig. 3B ersichtlich ist - zwischen der Gehäuseschale 1 und dem Core-Pack 3 wenigstens ein formschlüssiges Dicht-Halte-Element 5 vorgesehen, um das Core-Pack 3 bezüglich der Gehäuseschale 1 in zumindest einer Richtung lagefest zu halten und abzudichten. Dabei ist das wenigstens eine Dicht-Halte-Element 5 in Form einer Nut-Feder-Verbindung 6, 7 ausgebildet, wobei eine Nut 6 beispielhaft an der Gehäuseschale 1 ausgebildet ist und eine Feder 7 beispielhaft am Core-Pack 3 bzw. am Zellenhalter 8 ausgebildet ist.

Im Unterschied zum Ausführungsbeispiel der Fig. 2 beginnt das Dicht-Halte-Element 5 - bezogen auf die vertikale Richtung VR - bereits am Boden 2 der Gehäuseschale 1. Somit erfolgt ein Einfüllen der ersten Füllmenge der Vergussmasse (die die erste Lage L1 bildet) in die Gehäuseschale das Einfüllen derart, dass ein der Gehäuseschale 1 zugeordneter Teil des formschlüssigen Dicht-Halte-Elements 5 - in diesem Fall also die in Fig. 2B gezeigte Nut 6 - zumindest abschnittsweise von der ersten Füllmenge befüllt ist. Wird nun das Core-Packs 3 in seine in Fig. 3 gezeigte Endlage verbracht, so wird ein dem Core-Pack zugeordneter Teil des formschlüssigen Dicht-Halte-Elements 5 - in diesem Fall also die in Fig. 2B gezeigte Feder 7 - in die lediglich teilausgehärtete, erste Füllmenge der Vergussmasse eingedrückt.

Im Ausführungsbeispiel der Fig. 3 sind genau vier Dicht-Halte-Element 5 vorgesehen. Zwei befinden sich an der Vorderseite VS des Core-Packs 3 - eines davon ist wiederum gut zu erkennen in der Schnittdarstellung der Fig. 3B). Die zwei weiteren Dicht-Halte-Element 5 sind in entsprechender Weise an der Rückseite RS des Core-Packs 3 angeordnet.

Im Ausführungsbeispiel der Fig. 3 sind die formschlüssigen Dicht-Halte-Element 5 auch innerhalb der ersten Lage L1 der Vergussmasse VM befindlich. Die Dicht-Halte-Elemente 5 erstrecken sich in vertikaler Richtung VR zwischen dem in Fig. 3A gezeigten Boden B der Gehäuseschale 1 und Oberkante OK2 der zweiten Lage L2, die im Ausführungsbeispiel der Fig. 3 einen gestuften Verlauf ausweist.

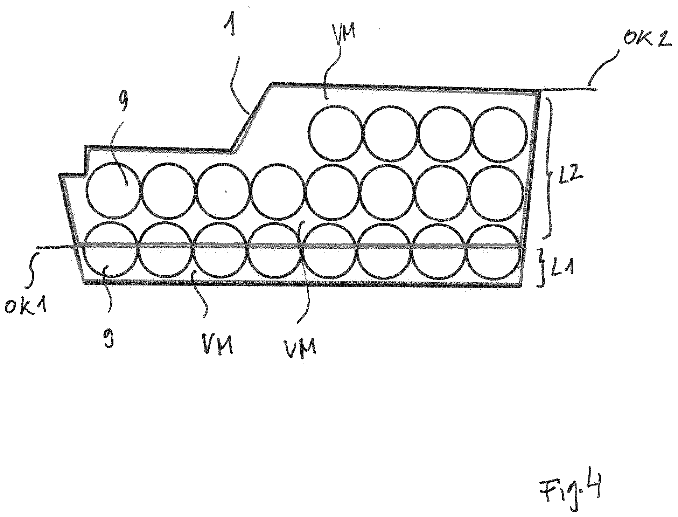

Fig. 4 zeigt nunmehr eine vereinfachte schematische Darstellung des Ausführungsbeispiels der Fig. 3. Wie der Fig. 4 entnommen werden kann, ist die Gehäuseschale 1 ist im Wesentlichen vollständig durch die erste Lage 1 und die zweite Lage L2 der Vergussmasse VM vergossen, so dass im Wesentlichen kein unvergossenes Restvolumen oberhalb der zweiten Lage L2 verbleibt. Die zweite Lage L2 wurde auf die teilausgehärtete erste Lage L1 aufgebracht. Im Zuge eines Herstellungsverfahrens kann die mit Akkuzellen befüllte untere Reihe von Akkuzellen 9 in die lediglich teilausgehärtete erste Lage 1 eingedrückt werden.

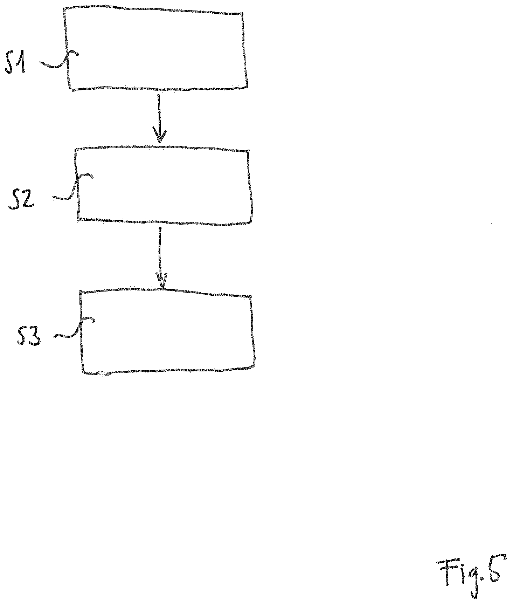

Ein bevorzugtes Ausführungsbeispiel eines erfindungsgemäßen Verfahrens zum Herstellen eines Akkupacks ist in Fig. 5 in Form eines Ablaufdiagramms gezeigt. Das Akkupack weist eine Gehäuseschale und ein in der Gehäuseschale aufzunehmendes Core-Pack auf, wobei die Gehäuseschale zumindest abschnittsweise mit einer Vergussmasse zu vergießen ist, die einer Wärmeabfuhr vom Core-Pack dient.

In einem ersten Verfahrensschritt S1 erfolgt ein Einfüllen einer ersten Füllmenge der Vergussmasse in die Gehäuseschale. Dabei ist zwischen der Gehäuseschale und dem Core-Pack zumindest ein formschlüssiges Dicht-Halte-Element in Form einer Nut-Feder-Verbindung vorgesehen, um das Core-Pack in aufgenommenem Zustand bezüglich der Gehäuseschale in zumindest einer Richtung lagefest zu halten und abzudichten.

Beim ersten Verfahrensschritt S1 des Einfüllens der ersten Füllmenge der Vergussmasse in die Gehäuseschale erfolgt das Einfüllen derart, dass die der Gehäuseschale zugeordnete Nut (Teil des formschlüssigen Dicht-Halte-Elements) zumindest abschnittsweise von der ersten Füllmenge befüllt wird und ein Boden der Gehäuseschale vollständig mit der ersten Füllmenge bedeckt wird.

In einem sich anschließenden zweiten Verfahrensschritt S2 erfolgt ein Verbringen des Core-Packs in seine Endlage innerhalb der Gehäuseschale, wobei die ersten Füllmenge der Vergussmasse teilausgehärtet, d.h. nicht vollständig ausgehärtet ist. Dabei wird die dem Core-Pack zugeordnete Feder (Teil des formschlüssigen Dicht-Halte-Elements) in die lediglich teilausgehärtete, erste Füllmenge der Vergussmasse, die in der Nut befindlich ist, eingedrückt. Gleichsam wird im Zuge zweiten Verfahrensschritts S2 eine mit Akkuzellen befüllte untere Reihe des Core-Packs in die lediglich teilausgehärtete erste Lage eingedrückt.

In einem sich anschließenden dritten Verfahrensschritt S3 erfolgt ein Einfüllen einer zweiten Füllmenge der Vergussmasse in die Gehäuseschale.

### Bezugszeichenliste

- 1: Gehäuseschale
- 2: Boden der Gehäuseschale
- 3: Core-Pack
- 5: formschlüssiges Dicht-Halte-Element
- 6: Nut
- 7: Feder
- 8: Zellenhalter
- 9: Akkuzelle
- 9': CID-Ventil
- 10: Akkupack
- 100: elektrische Handwerkzeugmaschine

- L1: erste Lage
- L2: zweite Lage
- OK1: Oberkante der ersten Lage
- OK2: Oberkante der ersten Lage
- RS: Rückseite
- RV: Restvolumen
- S1: erster Verfahrensschritt
- S2: zweiter Verfahrensschritt
- S3: dritter Verfahrensschritt
- SR: seitliche Richtung
- US: Unterseite
- VM: Vergussmasse
- VR: vertikale Richtung
- VS: Vorderseite

## Patentansprüche

1. Akkupack (10) für eine elektrische Handwerkzeugmaschine (100), wobei das Akkupack (10) eine Gehäuseschale (1) und ein in der Gehäuseschale (1) aufgenommenes Core-Pack (3) aufweist, wobei die Gehäuseschale (1) mit einer Vergussmasse (VM) vergossen ist, die einer Wärmeabfuhr vom Core-Pack (3) dient,
**dadurch gekennzeichnet, dass** die Vergussmasse (VM) wenigstes zweilagig mit einer ersten Lage (L1) und einer zweiten Lage (L2) in die Gehäuseschale (1) eingebracht ist.

2. Akkupack (10) nach Anspruch 1,
**dadurch gekennzeichnet, dass** die zweite Lage (L2) auf die teilausgehärtete erste Lage (L1) aufgebracht wurde.

3. Akkupack (10) nach Anspruch 1 oder 2,
**dadurch gekennzeichnet, dass** zwischen der Gehäuseschale (1) und dem Core-Pack (3) zumindest ein formschlüssiges Dicht-Halte-Element (5) vorgesehen ist, um das Core-Pack (3) bezüglich der Gehäuseschale (1) in zumindest einer Richtung lagefest zu halten und abzudichten.

4. Akkupack (10) nach Anspruch 4,
**dadurch gekennzeichnet, dass** die Vergussmasse (VM) derart wenigstes zweilagig in die Gehäuseschale (1) eingebracht ist, dass das formschlüssige Dicht-Halte-Element (5) zumindest abschnittsweise in die erste Lage (L1) der Vergussmasse eingedrückt ist.

5. Akkupack (10) nach Anspruch 4,
**dadurch gekennzeichnet, dass** die Vergussmasse (VM) derart wenigstes zweilagig in die Gehäuseschale (1) eingebracht ist, dass das formschlüssige Dicht-Halte-Element (5) lediglich außerhalb der ersten Lage (L1) der Vergussmasse befindlich ist.

6. Akkupack (10) nach einem der Ansprüche 3 bis 5,
**dadurch gekennzeichnet, dass** das formschlüssiges Dicht-Halte-Element (5) in Form einer Nut-Feder-Verbindung (6, 7) ausgebildet ist.

7. Akkupack (10) nach einem der vorangehenden Ansprüche,
**dadurch gekennzeichnet, dass** die erste Lage (L1) der Vergussmasse (VM) einen Boden (2) der Gehäuseschale (1) vollständig bedeckt.

8. Akkupack (10) nach einem der vorangehenden Ansprüche,
**dadurch gekennzeichnet, dass** innerhalb der Gehäuseschale (1) und oberhalb der zweite Lage (L2) der Vergussmasse (VM) ein unvergossenes Restvolumen (RV) verbleibt.

9. Akkupack (10) nach einem der vorangehenden Ansprüche,
**dadurch gekennzeichnet, dass** das Core-Pack (3) einen Zellenhalter (8) mit einer Mehrzahl zylindrischer Akkuzellen (9) aufweist.

10. Verfahren zum Herstellen eines Akkupacks für eine elektrische Handwerkzeugmaschine, wobei das Akkupack eine Gehäuseschale und ein in der Gehäuseschale aufzunehmendes Core-Pack aufweist, wobei die Gehäuseschale zumindest abschnittsweise mit einer Vergussmasse zu vergießen ist, die einer Wärmeabfuhr vom Core-Pack dient,
**dadurch gekennzeichnet, dass** das Verfahren die folgenden Schritte aufweist:
- (S1) Einfüllen einer ersten Füllmenge der Vergussmasse in die Gehäuseschale;
- (S2) Verbringen des Core-Packs in seine Endlage innerhalb der Gehäuseschale, wobei die ersten Füllmenge der Vergussmasse teilausgehärtet ist; und
- (S3) Einfüllen einer zweiten Füllmenge der Vergussmasse in die Gehäuseschale.

11. Verfahren nach Anspruch 10,
**dadurch gekennzeichnet, dass** zwischen der Gehäuseschale und dem Core-Pack zumindest ein formschlüssiges Dicht-Halte-Element vorgesehen ist, um das Core-Pack in aufgenommenem Zustand bezüglich der Gehäuseschale in zumindest einer Richtung lagefest zu halten und abzudichten, wobei beim Schritt (S1) des Einfüllens der ersten Füllmenge der Vergussmasse in die Gehäuseschale das Einfüllen derart erfolgt, dass ein der Gehäuseschale zugeordneter Teil des formschlüssigen Dicht-Halte-Elements zumindest abschnittsweise von der ersten Füllmenge bedeckt ist und/oder befüllt wird.

12. Verfahren nach Anspruch 11,
**dadurch gekennzeichnet, dass** beim Schritt (S2) des Verbringens des Core-Packs in seine Endlage ein dem Core-Pack zugeordneter Teil des formschlüssigen Dicht-Halte-Elements in die lediglich teilausgehärtete, erste Füllmenge der Vergussmasse eingedrückt wird.

13. Verfahren nach Anspruch 10,
**dadurch gekennzeichnet, dass** zwischen der Gehäuseschale und dem Core-Pack zumindest ein formschlüssiges Dicht-Halte-Element vorgesehen ist, um das Core-Pack in aufgenommenem Zustand bezüglich der Gehäuseschale in zumindest einer Richtung lagefest zu halten und abzudichten, wobei beim Schritt (S1) des Einfüllens der ersten Füllmenge der Vergussmasse in die Gehäuseschale das Einfüllen derart erfolgt, dass ein der Gehäuseschale zugeordneter Teil des formschlüssigen Dicht-Halte-Elements lediglich außerhalb einer durch die erste Füllmenge gebildeten ersten Lage der Vergussmasse befindlich ist.

14. Verfahren nach einem der Ansprüche 10 bis 13,
**dadurch gekennzeichnet, dass** beim Schritt (S1) des Einfüllens der ersten Füllmenge der Vergussmasse ein Boden der Gehäuseschale vollständig mit der ersten Füllmenge bedeckt wird.

15. Verfahren nach einem der Ansprüche 10 bis 14,
**dadurch gekennzeichnet, dass** innerhalb der Gehäuseschale und oberhalb der durch die zweite Füllmenge gebildete zweite Lage der Vergussmasse ein unvergossenes Restvolumen verbleibt.
